(19) Europäisches Patentamt
European Patent Office
Office européen des brevets

(11) **EP 4 628 824 A1**

(12) **EUROPÄISCHE PATENTANMELDUNG**

(43) Veröffentlichungstag:
 **08.10.2025 Patentblatt 2025/41**

(21) Anmeldenummer: **24168244.2**

(22) Anmeldetag: **03.04.2024**

(51) Internationale Patentklassifikation (IPC):
 *F27B 1/00* (2006.01)   *F27B 1/12* (2006.01)
 *F27D 1/00* (2006.01)   *F27D 1/10* (2006.01)
 *F27D 1/16* (2006.01)   *B01J 19/02* (2006.01)
 *C21B 7/06* (2006.01)

(52) Gemeinsame Patentklassifikation (CPC):
 **F27B 1/005; F27B 1/12; F27D 1/0006;**
 **F27D 1/0033; F27D 1/10; F27D 1/1678;**
 B01J 19/02; C21B 7/06

(84) Benannte Vertragsstaaten:
 **AL AT BE BG CH CY CZ DE DK EE ES FI FR GB**
 **GR HR HU IE IS IT LI LT LU LV MC ME MK MT NL**
 **NO PL PT RO RS SE SI SK SM TR**
 Benannte Erstreckungsstaaten:
 **BA**
 Benannte Validierungsstaaten:
 **GE KH MA MD TN**

(71) Anmelder: **ThyssenKrupp Steel Europe AG**
 **47166 Duisburg (DE)**

(72) Erfinder:
 • **Schubert, Daniel**
  **47057 Duisburg (DE)**
 • **El Gammal, Amin**
  **49473 Bissendorf (DE)**
 • **Kohnen, Boris**
  **45968 Gladbeck (DE)**

(74) Vertreter: **ThyssenKrupp Steel Europe AG**
 **Patente/Patent Department**
 **Kaiser-Wilhelm-Straße 100**
 **47166 Duisburg (DE)**

(54) **DIREKTREDUKTIONSANLAGE**

(57)    Die Erfindung betrifft eine Direktreduktionsanlage mit mindestens einem Reaktor, welcher mit einem Feuerfestmaterial bestückt ist.

Figur 1

Processed by Luminess, 75001 PARIS (FR)

**Beschreibung**

Die Erfindung betrifft eine Direktreduktionsanlage mit mindestens einem Reaktor, welcher mit einem Feuerfestmaterial bestückt ist.

Die internationale Stahlindustrie verursacht ca. 7 % der $CO_2$-Emissionen weltweit. Daher werden alternative Verfahren zur nachhaltigen Herstellung von Eisen und Stahl immer weiter vorangetrieben mit dem Ziel, diese frei von $CO_2$-Emissionen herzustellen. Eine vielversprechende davon ist die wasserstoffbasierte Direktreduktion von Eisenerzen und -pellets beispielsweise in einem Schachtofen. Die Direktreduktion wird bereits seit Jahrzehnten erfolgreich als Alternativverfahren zum Hochofen betrieben. Reduktionsmittel ist in den meisten Fällen Erdgas, welches entweder direkt oder zunächst in einem Reformer zu Wasserstoff und Kohlenstoffmonoxid umgewandelt und anschließend in einen Schachtofen eingeleitet wird. Wasserstoff als Reduktionsmittel gewinnt immer mehr an Bedeutung, da es Eisenoxid $CO_2$-frei zu Eisenschwamm reduzieren kann.

Der Aufbau von Reaktoren einer Direktreduktionsanlage ist beispielhaft in den Veröffentlichungen DE 3 781 923 T2, US 5 766 542 und EP 3 891 454 B1 beschrieben.

Eine der Herausforderungen ist die feuerfeste Zustellung in einem Direktreduktions-Reaktor, beispielsweise in Form eines Schachtofens, welcher mit Wasserstoff als Reduktionsgas betrieben werden soll. Silikathaltige Zustellungen - wie üblicherweise eingesetzt, vgl. auch EP 3 891 454 B1 - sind anfällig gegenüber wasserstoffinduzierter Korrosion. Hierbei reagiert bei hohen Temperaturen $SiO_2$ mit $H_2$ zu volatilem SiO als Hauptreaktionsprodukt. Dies führt zu massivem Gewichts- und Festigkeitsverlust dieser feuerfesten Werkstoffe und dies kann auch zu einem Versagen der Werkstoffe führen, vgl. auch Tonnesen et. al. "Wasserstoff-Korrosion von unterschiedlichen Feuerbetonen und ihrer Bindematrix", 7. DGFS-Fachtagung, Innovationen und Neuerungen im Feuerfest- und Schornsteinbau, Düsseldorf 12.06.2023, abrufbar über: https://dgfs-online.de/files/09.10_uhr_dr._tonnesen.pdf. Darüber hinaus besteht das Risiko, dass das volatile SiO in kühleren Bereichen des Reaktors wieder rückoxidiert und sich in Form von $SiO_2$-Ablagerungen, beispielsweise als Clogging absetzt oder den Reaktor oder den zu erzeugenden bzw. erzeugten Eisenschwamm anderweitig schädigt.

Aufgabe der vorliegenden Erfindung ist es, eine Maßnahme bereitzustellen, mit welcher eine wasserstoffinduzierte Korrosion und/oder eine Entstehung von volatilem SiO verringert oder gar ausgeschlossen werden kann, um die daraus resultierenden vorgenannten Nachteile im Wesentlichen zu vermeiden.

Diese Aufgabe wird gelöst durch eine Direktreduktionsanlage mit den Merkmalen des Anspruchs 1 und durch eine Verwendung mit den Merkmalen des Anspruchs 10.

Die erste Lehre betrifft somit eine Direktreduktionsanlage mit mindestens einem Direktreduktions-Reaktor, in welchem Eisenerzträger eingebracht und mittels Kontakt eines heißen durchgeleiteten wasserstoffbasierten Reduktionsgases zu Eisenschwamm reduziert werden, wobei der Direktreduktion-Reaktor einen Reaktormantel mit einer Innenfläche umfasst, welche zumindest teilweise mit einer Innenauskleidung ausgekleidet ist, wobei die Innenauskleidung mindestens eine erste Innenverkleidungsschicht aus einem feuerfesten Material umfasst, wobei zumindest abschnittsweise Stahlplatten an der Innenauskleidung angeordnet sind.

Gemäß einer zweiten Lehre betrifft die Erfindung eine Verwendung von Stahlplatten zum zumindest abschnittsweisen Anordnen an einer Innenauskleidung in einem Direktreduktions-Reaktor einer Direktreduktionsanlage.

Die Erfindung zielt darauf ab, im Inneren des Direktreduktions-Reaktors eine geeignete schützende Innenwandung aus einem Stahlwerkstoff zumindest abschnittsweise vor der Innenauskleidung zu installieren mit der Maßnahme, eine wasserstoffinduzierte Korrosion des feuerfesten Materials der Innenauskleidung zu verringern beziehungsweise im Wesentlichen zu unterbinden. Bei vorherrschenden Temperaturen im Direktreduktions-Reaktor mit beispielsweise 600 bis 1100 °C eignet sich eine Verwendung eines Stahlwerkstoffs hervorragend, da er im Wesentlichen in dem genannten Bereich temperaturstabil ist und je nach Zusammensetzung somit weit unterhalb seiner Schmelztemperatur von mindestens größer als 1400 °C verwendet wird.

Des Weiteren können die Stahlplatten bei dem zumindest abschnittsweisen Anordnen an einer Innenauskleidung in einem Direktreduktions-Reaktor einer Direktreduktionsanlage auch noch die Aufgabe übernehmen, dass sie die Innenauskleidung im Bereich ihres Anordnens vor dem abrasiven Einfluss der vorbeigleitenden Eisenträger bzw. Eisenschwamm schützen.

Die Stahlplatten weisen eine endliche Geometrie auf - sprich eine Länge, Breite und Wandstärke -, zum einen, um sie relativ einfach händeln zu können und zum anderen können die Platten entlang des Umfangs nebeneinander platziert werden, insbesondere aufgrund eines klassisch gewölbten Standard-Direktreduktions-Reaktors, welcher auch der Innenauskleidung folgt. Die Abmessung (Länge und Breite) der einzelnen Stahlplatten kann individuell gestaltet werden, vorzugsweise an die Einbausituation im Direktreduktions-Reaktor anpassbar. So können, müssen aber nicht, alle Stahlplatten die gleiche Abmessung aufweisen. Je nach Abmessung kann oder können einzelne Stahlplatten auch eine Wölbung aufweisen, so dass sie auch ein an die Innenauskleidung konformes Anschmiegen im Einbauzustand ermöglichen.

Die Befestigung der einzelnen Stahlplatten ist dem Fachmann geläufig. Beispielsweise können bei einer (Neu-) Zustellung Verankerungspunkte in der Innenauskleidung berücksichtigt werden oder aber auch nachträglich eingebracht werden, beispielsweise in Form von Dübeln oder anderen geeigneten Mitteln zur beispielsweise kraft- und/oder formschlüssigen Aufnahme von Befestigungsmitteln, wie zum Beispiel Schrauben, so dass die Stahlplatten an entsprechenden Stellen Löcher aufweisen, um Befestigungsmitteln, wie zum Beispiel Schrauben, hindurchführen zu können und die Stahlplatten damit an der Innenauskleidung befestigen zu können.

Insbesondere kann vor dem Anordnen und Befestigen der Stahlplatten eine Hinterfüllmasse auf der Innenauskleidung aufgetragen werden, um somit einen im Wesentlichen vollflächigen Kontakt zu den Stahlplatten ermöglichen zu können, so dass lokale Lufteinschlüsse zwischen Innenauskleidung und Stahlplatten im Wesentlichen vermieden werden können. Entsprechende Hinterfüllmassen, beispielsweise in Form von Hinterfüllsanden oder Rammmassen sind dem Fachmann geläufig.

Das heiße wasserstoffhaltige Reduktionsgas wird auf eine Temperatur zwischen 600 und 1100 °C erwärmt. Die Temperatur des heißen Reduktionsgases kann insbesondere 650 °C, vorzugsweise mindestens 700 °C, bevorzugt mindestens 800 °C erwärmt werden. Bei einem Einspeisen von (im Wesentlichen 100 %) Wasserstoff kann eine Einspeisung ohne insbesondere zusätzliche Beaufschlagung und somit Nachverbrennung mit Sauerstoff erfolgen, sprich, dass dadurch eine vollständige Nutzung des Wasserstoffs für die Reduktion der Eisenerzträger gewährleistet und dadurch das Verfahren wirtschaftlicher betrieben werden kann. Sehr hohe Wasserstoffanteile müssen nicht auf so hohe Temperaturen erwärmt werden, da die Reduktion der Eisenerzträger, vgl. entsprechendes Baur-Glässner-Diagramm, bei niedrigen Temperaturen stattfinden kann. Die Temperatur kann daher insbesondere auf maximal 1050 °C, vorzugsweise auf maximal 1000 °C, bevorzugt auf maximal 950 °C verringert werden.

Beim Reduzieren vom Eisenerzträger zu Eisenschwamm nimmt das elementare Eisen zu und lässt sich durch den Metallisierungsgrad beschreiben:

$$\text{Metallisierungsgrad } [\%] = 100 * Fe_{elementar} \, [\%] \, / \, Fe_{total} \, [\%]$$

Aufgrund des Kontakts der Eisenerzträgeroberfläche mit dem heißen Reduktionsgas beginnen Reaktionsvorgänge und letztendlich ein Metallisieren von außen nach innen. Eine vollständige Reduktion, sprich ein Metallisierungsgrad von 100 % ist zwar theoretisch möglich, in der Praxis spielt die Wirtschaftlichkeit eine wichtige Rolle und somit die Zeit für das Reduzieren, so dass ein Metallisierungsgrad bis zu 100 %, insbesondere eher bis zu 98 % angestrebt wird. Ein Metallisierungsgrad von mindestens 70 %, insbesondere 75 %, vorzugsweise mindestens 80 %, bevorzugt mindestens 85 % und besonders bevorzugt 90 % wird im Direktreduktionsprozess angestrebt.

Gemäß einer Ausführung können die Stahlplatten eine Wandstärke zwischen 4,0 und 25,0 mm aufweisen, insbesondere zwischen 5,0 und 20,0 mm, vorzugsweise zwischen 6,0 und 18,0 mm. Als Stahlwerkstoff eignen sich kostengünstige Kohlenstoffstähle, welche insbesondere auch eine gewisse Verschleißbeständigkeit mit sich bringen. So kommen bevorzugt Baustähle, beispielsweise der Gattung S355 und weitere vergleichbare Güten zur Anwendung.

Gemäß einer Ausführung kann das feuerfeste Material der ersten Innenverkleidungsschicht eine Wärmeleitfähigkeit λ bei 1000 °C zwischen 0,90 W/mK und 4,0 W/mK aufweisen, insbesondere zwischen 1,20 W/mK und 2,60 W/mK, vorzugsweise zwischen 1,30 W/mK und 2,40 W/mK. Vorzugsweise ist sicherzustellen, dass durch die erste Innenverkleidungsschicht eine Isolierwirkung gegenüber dem Reaktormantel stattfindet, damit genügend Prozesswärme im Direktreduktions-Reaktor verbleibt, wobei die erste Innenverkleidungsschicht über eine geeignete Druckfestigkeit verfügt. Zum Beispiel kann das feuerfeste Material in Gew.-% $Al_2O_3$ zwischen 30 und 90 %, $SiO_2$ zwischen 10 und 40 %, optional $CaO$ und/oder $Fe_2O_3$ und/oder $MgO$ bis zu 20 % und ggf. einen Rest als Verunreinigungen bis zu 5 %, insbesondere bis zu 2 % enthalten oder daraus bestehen. Die Art und Weise zur Erstellung bzw. Zustellung eines Reaktors mit einer ersten aus feuerfesten Steinen/Wölber zusammengesetzten ersten Innenverkleidungsschicht ist gängige Praxis, insbesondere unter Anwendung eines geeigneten feuerbeständigen Mörtels.

Beispielsweise ist die erste Innenverkleidungsschicht aus konventionellen und bekannten Feuerleichtsteinen zusammengesetzt.

Als Rest bzw. Verunreinigungen gelten Stoffe und/oder Elemente und/oder Stoffverbindungen, welche im Material enthalten sind bzw. in den genannten Grenzen in Summe enthalten sein können und nicht gezielt zugegeben werden, was dem Fachmann geläufig ist.

Gemäß einer Ausführung kann die Innenauskleidung mindestens eine zweite Innenverkleidungsschicht aus einem feuerfesten Material umfassen, welche auf der dem Reaktormantel abgewandten Seite angeordnet ist. Das feuerfeste Material der zweiten Innenverkleidungsschicht kann eine Wärmeleitfähigkeit λ bei 1000 °C zwischen 0,010 W/mK und 2,0 W/mK aufweisen, insbesondere zwischen 0,10 W/mK und 1,60 W/mK, vorzugsweise zwischen 0,20 W/mK und 1,0 W/mK.

insbesondere weist das feuerfeste Material der zweiten Innenverkleidungsschicht eine höhere Wärmeleitfähigkeit im Vergleich zum feuerfesten Material der ersten Innenverkleidungsschicht auf. Beispielsweise um mindestens Faktor 2 höher, vorzugsweise um mindestens Faktor 5 höher, bevorzugt um mindestens Faktor 5 höher.

Da die zweite Innenverkleidungsschicht zumindest in den Abschnitten, in welchen die Stahlplatten angeordnet sind, nicht verschleißbeständig sein muss, was einem Standard entspricht, und dadurch in diesem Abschnitt auch kein Kontakt zu den abrasiven Eisenerzträger bzw. Eisenschwamm vorliegt, kann ein im Vergleich zu verschleißbeständigen feuerfesten Materialen kostengünstiges feuerfestes Material für die zweite Innenverkleidungsschicht vorgesehen werden. Auch hier ist die Art und Weise zur Erstellung bzw. Zustellung mit einer weiteren aus feuerfesten Steinen/Wölber zusammengesetzten zweiten Innenverkleidungsschicht, insbesondere angrenzend an eine erste Innenverkleidungsschicht, ebenfalls gängige Praxis.

Beispielsweise kann das feuerfeste Material der zweiten Innenverkleidungsschicht dem feuerfesten Material der ersten Innenverkleidungsschicht entsprechen.

Beispielsweise kann (auch) die zweite Innenverkleidungsschicht aus konventionellen und bekannten Feuerleichtsteinen zusammengesetzt sein.

Alternativ kann die zweite Innenverkleidungsschicht aus konventionellen und bekannten phosphatgebundenen feuerfesten Steinen zusammengesetzt sein.

Die Innenauskleidung mit einer ersten und mindestens einer zweiten Innenverleidungsschicht kann beispielhaft auf eine wärmeabführende und isolierende Wirkung beschränkt werden.

Die erste Innenverkleidungsschicht kann beispielsweise aus Schamotte oder Mullit, dem Fachmann gängige und bekannte Materialien, zusammengesetzt sein.

Die Dicke der ersten Innenverkleidungsschicht kann beispielsweise zwischen 200 und 500 mm betragen.

Die zweite Innenverkleidungsschicht kann beispielsweise aus Feuerleichtsteinen, dem Fachmann gängige und bekannte Materialien, zusammengesetzt sein.

Die Dicke der zweiten Innenverkleidungsschicht kann beispielsweise zwischen 150 und 400 mm betragen.

Die Einstellung und Auslegung geeigneter feuerfester Materialien der ersten Innenverkleidungsschicht und optional der zweiten Innenverkleidungsschicht lässt sich beispielhaft über eine quasistationäre Wärmedurchgangsberechnung ermitteln, beispielsweise mittels "F-Soft" Version 6.1.14 oder "FactSage" Version 8.3.

Eisenerzträger können in Form von Sinter, Pellets und/oder Eisen-/Stückerz bereitgestellt werden.

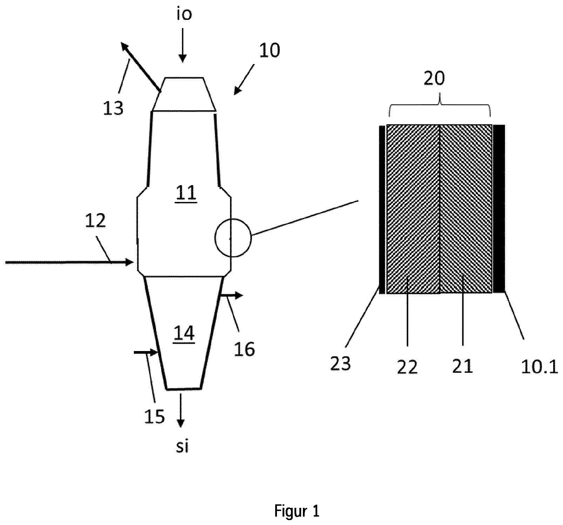

Näher erläutert wird die Erfindung anhand der folgenden Ausführungsbeispiele in Verbindung mit der einzigen Figur 1.

In Figur 1, linke Abbildung, wird die Erfindung am Beispiel einer Direktreduktionsanlage, umfassend mindestens Direktreduktions-Reaktor (10) in Form eines beispielhaften Schachtofens, erläutert. In dem mindestes einen Direktreduktions-Reaktor (10) wird Eisenerzträger (io) zu Eisenschwamm (si) mittels eines heißen wasserstoffbasierten Reduktionsgases (12) reduziert sowie auch erwärmt. Eisenerzträger in Form von beispielsweise Stück-/Eisenerz "iron ore" (io) werden am oberen Ende des Schachtofens (10) eingebracht. Am unteren Ende des Schachtofens (10) wird der erzeugte Eisenschwamm "sponge iron" (si) entnommen. Im Schachtofen (10) ist eine Reduktionszone (11) angeordnet. Je nach Auslegung und Bedürfnis kann optional auch eine Kühlzone (14) vorgesehen sein, wobei diese dann unterhalb der Reduktionszone (11) angeordnet ist. Die Kühlzone (14) ist nicht zwingend erforderlich, wenn ein Heißeinsatz des unmittelbar die Reduktionszone (11) verlassenden heißen Eisenschwamms (si) möglich ist, beispielsweise indem der Eisenschwamm (si) in einem geeigneten nicht dargestellten Einschmelzer erschmolzen wird oder einer nicht dargestellten Brikettierungsanlage zur Herstellung von sogenanntem und bekanntem "HBI" zugeführt werden kann. Das wasserstoffhaltige Reduktionsgas (12) wie auch das optionale Kühlgas (15) durchströmen den in der Reduktionszone (11) befindlichen Eisenerzträger und den in der optionalen Kühlzone (14) befindlichen Eisenschwamm im Gegenstromprinzip, somit entgegen einer Bewegungsrichtung der Eisenerzträger (io) bzw. Eisenschwamm. Das wasserstoffhaltige Reduktionsgas (12) wird vor dem Einspeisen in einem oder mehreren nicht dargestellten Erhitzer/Reformer auf eine Temperatur von mindestens 600 und bis zu 1100 °C erwärmt. Das wasserstoffhaltige Reduktionsgas (12) kann einen Wasserstoff-Gehalt zwischen 20 bis hin zu 100 % umfassen oder daraus bestehen. Das aus der Reduktionszone (11) des Schachtofens (10) ausgeschleuste Prozessgas (15) kann sich aus u.a. unverbrauchtem Reduktionsgas, Wasserdampf und unvermeidbaren Verunreinigungen zusammensetzen.

Der Direktreduktions-Reaktor (10) umfasst einen Reaktormantel (10.1) mit einer Innenfläche, rechte kleine Abbildung in Figur 1 als Teilschnittansicht, welche zumindest teilweise mit einer Innenauskleidung (20) ausgekleidet ist, wobei die Innenauskleidung (20) mindestens eine erste Innenverkleidungssschicht (21) aus einem feuerfesten Material umfasst, wobei zumindest abschnittsweise Stahlplatten (23) an der Innenauskleidung (20) angeordnet sind. Die verwendeten Stahlplatten (23) zum zumindest abschnittsweisen Anordnen an einer Innenauskleidung (20) in einem Direktreduktions-Reaktor (10) einer Direktreduktionsanlage können eine Wandstärke zwischen 4,0 und 25,0 mm aufweisen.

Die Innenauskleidung (20) kann bevorzugt mindestens eine zweite Innenverkleidungsschicht (22) aus einem feuerfesten Material umfassen, welche auf der dem Reaktormantel (10.1) abgewandten Seite angeordnet ist. Beispielsweise kann das feuerfeste Material der zweiten Innenverkleidungsschicht (22) dem feuerfesten Material der ersten Innenverkleidungsschicht (21) entsprechen. Denkbar ist auch, feuerfestes Material als zweite Innenverkleidungsschicht (22) aus einer phosphatgebundenen tonerdreichen Schicht zu erstellen.

Die erste Innenverkleidungsschicht (21) kann eine Dicke von 350 mm aufweisen und aus Schamotte oder Mullit zusammengesetzt sein. Die zweite Innenverkleidungsschicht (22) kann eine Dicke von 250 mm aufweisen und aus Feuerleichtsteinen zusammengesetzt sein.

Die Stahlplatten (23) können nur in einem Abschnitt, beispielsweise in dem Bereich bzw. in dem Abschnitt des Direktreduktions-Reaktors (10), in welchem das heiße wasserstoffhaltige Reduktionsgas (12) eingespeist wird oder prinzipiell im Abschnitt der Reduktionszone (11), in welchem das die Innenauskleidung (20) vor dem korrosiven Wasserstoff geschützt werden muss, angeordnet sein. Alternativ kann auch zusätzlich der in Form eines Schachtofens ausgebildete Direktreduktions-Reaktor (10) untere Abschnitt, in welchem eine optionale Kühlzone (14) eingerichtet sein kann, mit Stahlplatten (23) ausgerüstet sein, um somit u.a. auch keinen Verschleiß der feuerfesten Materialen in diesem Abschnitt zu haben. Damit kann auch gemäß einer Ausführung die gesamte Innenauskleidung (20) vollständig mit Stahlplatten (23) ausgerüstet sein.

**Patentansprüche**

1. Direktreduktionsanlage mit mindestens einem Direktreduktions-Reaktor (10), in welchem Eisenerzträger eingebracht und mittels Kontakt eines heißen durchgeleiteten wasserstoffbasierten Reduktionsgases zu Eisenschwamm reduziert werden, wobei der Direktreduktions-Reaktor (10) einen Reaktormantel (10.1) mit einer Innenfläche umfasst, welche zumindest teilweise mit einer Innenauskleidung (20) ausgekleidet ist, wobei die Innenauskleidung (20) mindestens eine erste Innenverkleidungsschicht (21) aus einem feuerfesten Material umfasst, **dadurch gekennzeichnet, dass** zumindest abschnittsweise Stahlplatten (23) an der Innenauskleidung (20) angeordnet sind.

2. Direktreduktionsanlage nach Anspruch 1, wobei die Stahlplatten (23) eine Wandstärke zwischen 4,0 und 25,0 mm aufweisen.

3. Direktreduktionsanlage nach einem der vorgenannten Ansprüche, wobei das feuerfeste Material der ersten Innenverkleidungsschicht (21) eine Wärmeleitfähigkeit $\lambda$ bei 1000 °C zwischen 0,90 W/mK und 4,0 W/mK aufweist.

4. Direktreduktionsanlage nach einem der vorgenannten Ansprüche, wobei die Innenauskleidung (20) mindestens eine zweite Innenverkleidungsschicht (22) aus einem feuerfesten Material umfasst, welche auf der dem Reaktormantel (10.1) abgewandten Seite angeordnet ist.

5. Direktreduktionsanlage nach Anspruch 4, wobei das feuerfeste Material der zweiten Innenverkleidungsschicht (22) eine Wärmeleitfähigkeit $\lambda$ bei 1000 °C zwischen 0,010 W/mK und 2,0 W/mK aufweist.

6. Direktreduktionsanlage nach einem der vorgenannten Ansprüche, wobei das feuerfeste Material der zweiten Innenverkleidungsschicht (22) dem feuerfesten Material der ersten Innenverkleidungsschicht (21) entspricht.

7. Direktreduktionsanlage nach einem der vorgenannten Ansprüche, wobei die zweite Innenverkleidungsschicht (22) aus phosphatgebundenen feuerfesten Steinen zusammengesetzt ist.

8. Verwendung von Stahlplatten (24) zum zumindest abschnittsweisen Anordnen an einer Innenauskleidung (20) in einem Direktreduktions-Reaktor (10) einer Direktreduktionsanlage.

io

10

13

11

12

14

16

15

si

20

23  22  21  10.1

Figur 1

Europäisches
Patentamt

European
Patent Office

Office européen
des brevets

## EUROPÄISCHER RECHERCHENBERICHT

**Nummer der Anmeldung**

EP 24 16 8244

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | US 11 859 907 B2 (DANIELI OFF MECC [IT]; HYL TECH S A DE C V [MX]; DANIELI OFF MECC [IT]) 2. Januar 2024 (2024-01-02) <br> * Abbildungen 1-3 * <br> * Spalte 1, Zeile 15 - Zeile 27 * <br> * Spalte 3, Zeile 50 - Spalte 5, Zeile 20 * <br> * Spalte 5, Zeile 38 - Spalte 7, Zeile 51 * <br> ----- | 1-8 | INV. <br> F27B1/00 <br> F27B1/12 <br> F27D1/00 <br> F27D1/10 <br> F27D1/16 <br> B01J19/02 <br> C21B7/06 |
| A | CN 117 025 885 A (MCC CAPITAL ENG & RES INC LTD) 10. November 2023 (2023-11-10) <br> * Abbildungen 1-6 * <br> * Absatz [0001] * <br> * Absatz [0019] - Absatz [0042] * <br> * Absatz [0043] - Absatz [0085] * <br> ----- | 1-8 | |

**RECHERCHIERTE SACHGEBIETE (IPC)**

F27B
B01J
C21B
F27D

Der vorliegende Recherchenbericht wurde für alle Patentansprüche erstellt

| Recherchenort | Abschlußdatum der Recherche | Prüfer |
|---|---|---|
| Den Haag | 2. September 2024 | Jung, Régis |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**EP 4 628 824 A1**

**ANHANG ZUM EUROPÄISCHEN RECHERCHENBERICHT
ÜBER DIE EUROPÄISCHE PATENTANMELDUNG NR.**   EP 24 16 8244

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

02-09-2024

| Im Recherchenbericht angeführtes Patentdokument | Datum der Veröffentlichung | Mitglied(er) der Patentfamilie | Datum der Veröffentlichung |
|---|---|---|---|
| US 11859907 B2 | 02-01-2024 | CN 113330266 A | 31-08-2021 |
| | | EP 3891454 A1 | 13-10-2021 |
| | | ES 2956871 T3 | 29-12-2023 |
| | | FI 3891454 T3 | 21-09-2023 |
| | | RU 2761850 C1 | 13-12-2021 |
| | | US 2021333048 A1 | 28-10-2021 |
| | | WO 2020115779 A1 | 11-06-2020 |
| CN 117025885 A | 10-11-2023 | KEINE | |

Für nähere Einzelheiten zu diesem Anhang : siehe Amtsblatt des Europäischen Patentamts, Nr.12/82

EPO FORM P0461

8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3781923 T2
- US 5766542 A
- EP 3891454 B1

**In der Beschreibung aufgeführte Nicht-Patentliteratur**

- **TONNESEN**. Wasserstoff-Korrosion von unterschiedlichen Feuerbetonen und ihrer Bindematrix. *DGFS-Fachtagung, Innovationen und Neuerungen im Feuerfest- und Schornsteinbau*, 12 June 2023, https://dgfs-online.de/files/09.10_uhr_dr._tonnesen. pdf